# EUROPÄISCHE PATENTSCHRIFT

(11) **EP 2 363 684 B1**
(45) Veröffentlichungstag und Bekanntmachung des Hinweises auf die Patenterteilung: **22.04.2020**
(21) Anmeldenummer: 10001391.1
(22) Anmeldetag: 10.02.2010
(51) Int. Cl.: G01N 21/27

(54) **Kalibrierzelle**
Calibration cell
Cellule de calibrage

(43) Veröffentlichungstag der Anmeldung: 07.09.2011
(73) Patentinhaber: ISRA VISION Graphikon GmbH, 10409 Berlin (DE)
(72) Erfinder: Eberhardt, Guido, 13156 Berlin (DE); Krahn, Andreas, 15738 Zeuthen (DE); Wössner, Ralph, 10243 Berlin (DE)
(74) Vertreter: Obst, Bernhard

(56) Entgegenhaltungen:
- EP-A1- 1 703 273
- DE-A1-102008 007 178
- JP-A- 2007 328 038
- US-A1- 2004 227 937
- US-A1- 2006 183 342
- US-B1- 6 664 535

## Beschreibung

Die Erfindung betrifft ein Verfahren zum Herstellen einer Probe für optische Kalibrierungsmessungen und Messungen zur Verifizierung einer Messgenauigkeit sowie eine solche Probe, insbesondere für eine Kalibrierung und/oder Verifizierung von abbildenden Messeinrichtungen zur Bestimmung geometrischer Abmessungen, wie sie beispielsweise im Bereich der Fertigung von Solarzellen verwendet werden.

In vielen industriellen Fertigungsprozessen ist es notwendig, gefertigte Erzeugnisse, Bestandteile hiervon oder auch Vorstufen der Erzeugnisse oder deren Bestandteile hinsichtlich ihrer geometrischen Gestalt zu vermessen, um beispielsweise eine Maßhaltigkeit zu überprüfen. Im Stand der Technik sind unterschiedliche Verfahren bekannt, um solch eine Vermessung auszuführen. Ein Teil dieser Messverfahren werden optisch ausgeführt. Wiederum eine Untergruppe hiervon sieht vor, dass die zu untersuchende Probe, beispielsweise ein Erzeugnis oder ein Teil hiervon, ortsaufgelöst abbildend erfasst wird. Anhand der Abbildung werden dann mit Hilfe von Bildverarbeitungsverfahren Konturen des Erzeugnisses und/oder von Bestandteilen des Erzeugnisses ermittelt und die Abmessungen der ermittelten Konturen bestimmt.

Wie bei fast allen Messeinrichtungen und Messverfahren ist es notwendig, diese zu kalibrieren. Hierzu werden in der Regel zuvor, vorzugsweise mittels einer anderen Messeinrichtung oder eines anderen Messverfahrens, vermessene Proben herangezogen und von der zu kalibrierenden Messeinrichtung bzw. mit dem zu kalibrierenden Messverfahren vermessen, um einen Abgleich zwischen den bei der Kalibration ermittelten Messwerten und den vorbekannten Messwerten zu erreichen. Alternativ kann eine Probe verwendet werden, deren genaue Abmessungen aufgrund des Herstellungsverfahrens der Probe ausreichend genug bekannt sind. Eine solche vorbekannte Messprobe wird als Kalibrierprobe bezeichnet. Außer zur Kalibrierung werden Kalibrierproben jedoch auch benötigt und verwendet, um zu überprüfen, ob die von einer Messeinrichtung oder einem Messverfahren gelieferten Messergebnisse korrekt bzw. innerhalb vorgegebener Messtoleranzen liegen. Eine solche Überprüfung wird auch als Überprüfung einer Messfähigkeit bezeichnet. Hierbei wird nämlich ermittelt, ob die Messeinrichtung oder das Messverfahren die Fähigkeit aufweisen, Proben im Rahmen einer vorgegebenen Messtoleranz korrekt zu vermessen.

Aus der DE 10 2008 007 178 A1 sind eine Kalibriervorrichtung und ein Laser-Scanning-Mikroskop mit einer derartigen Kalibriervorrichtung bekannt. Die Kalibriervorrichtung, die zueinander in einer gemeinsamen Fassung fest ausgerichtet eine Fokussieroptik und eine in der Fokalebene der Fokussieroptik angeordnete Teststruktur mit in der Aufsicht und/oder Durchsicht nachweisbaren Strukturelementen aufweist, ist in einem Laser-Scanning-Mikroskop derart in den Mikroskop-Strahlengang einschaltbar, dass die Pupille der Fokussieroptik mit einer Objektivpupille des Laser-Scanning-Mikroskops zusammenfällt oder in einer dazu konjugierten Ebene liegt. Die Teststruktur weist in einer Ausführungsform ein aus reflektierendem Material gebildete Gitterelemente auf und in Zwischenbereichen ein fluoreszierendes Material.

Aus der US 2006/0183342 A1 sind strukturierte Vorrichtungen mit einem Substrat bekannt, auf dem strukturiertes Metall und oxidiertes Metall aufgebracht sind, welches das strukturierte Metall umgibt.

In einigen Bereichen der Technik ist es üblich, eines der regelmäßig zu vermessenden Erzeugnisse präzise zu vermessen und anschließend als Kalibrierprobe zumindest zum Zwecke einer Überprüfung einer Messeinrichtung oder eines Messverfahrens im Hinblick auf deren Messfähigkeit zu verwenden. Voraussetzung hierfür ist neben der exakten Vermessung des jeweiligen Erzeugnisses, dass dieses in seinen Eigenschaften dauerhaft stabil sowie idealerweise reproduzierbar herstellbar ist und durch das eigentliche Messverfahren hinsichtlich seiner zu vermessenden Eigenschaften nicht verändert wird. Im Bereich der Fertigung von Solarzellen lassen sich diese Anforderungen durch eine Solarzelle selbst nicht hinreichend erfüllen. Aufgrund einer geringen Materialdicke, die beispielsweise typischerweise im Bereich von etwa 180 µm liegt, lassen sich Solarzellen selbst bei vorsichtiger Handhabung nicht beliebig oft für eine Kontrollmessung zur Überprüfung der Messfähigkeit in in Fertigungsstraßen eingefügte Messeinrichtungen einbringen und entnehmen, ohne dass diese Solarzellen beschädigt oder vollständig zerstört werden.

Insbesondere bei Messungen zur Qualitätskontrolle in der Solarzellenfertigung sind neben den geometrischen Abmessungen des Halbleitersubstrats auch die geometrischen Abmessungen einer auf die Solarzelle aufgebrachten Bedruckung von Interesse. Eine Kalibrierprobe, die für Kalibrierungsmessungen oder Kontrollmessungen zur Überprüfung der Messfähigkeit einer Messeinrichtung geeignet ist, die sowohl die geometrischen Abmessungen des Halbleitersubstrats einer Solarzelle als auch einer hierauf aufgebrachten Bedruckung ermitteln kann, wird hier im Folgenden als Kalibrierprobe bezeichnet.

Es besteht somit ein Bedarf, ein Verfahren zur Herstellung einer Kalibrierprobe sowie eine Kalibrierprobe zu schaffen, wobei die Kalibrierprobe einerseits hinsichtlich ihrer geometrischen Ausgestaltung hochpräzisen vorgegebenen und vorbekannten geometrischen Abmessungen entspricht bzw. entsprechend dieser hochpräzisen Vorgaben gefertigt wird und andererseits in der Weise dauerhaft ist, dass sie häufig in einer Fertigungseinrichtung vermessen werden kann, ohne dass die geometrischen Eigenschaften beeinträchtigt werden. Darüber hinaus besteht ein Bedarf daran, eine Kalibrierprobe zu schaffen, mit der eine abbildende Messeinrichtung sowohl die geometrischen Maße einer Halbleiterstruktur als auch die geometrischen Maße einer hierauf aufgebrachten Bedruckung überprüfen kann.

Die Aufgabe wird durch ein Verfahren zum Herstellen einer Kalibrierzelle mit den Merkmalen des Patentanspruchs 1, eine Kalibrierzelle mit den Merkmalen des Patentanspruchs 7 sowie ein Verfahren zum Nachweisen einer Messfähigkeit mit den Merkmalen des Patentanspruchs 15 erfüllt.

Der Erfindung liegt der Gedanke zugrunde, eine Kalibrierprobe zu schaffen, die hinsichtlich ihrer geometrischen Eigenschaften einfach reproduzierbar herstellbar ist und zum andern die für eine abbildende Messung notwendigen Eigenschaften eines Halbleiterbauelements, insbesondere einer Solarzelle, möglichst gut widerspiegelt. Eine solche Kalibrierzelle umfasst ein transparentes Substrat mit einer Seitenfläche, auf die eine hochpräzise strukturierte spiegelnde Schicht aufgebracht ist, welche durch das transparente Substrat transmittierte Strahlung spiegelnd reflektiert, wobei die Struktur so ausgebildet ist, dass die spiegelnde Schicht Aussparungen aufweist, an denen die Seitenfläche nicht durch die spiegelnde Schicht überdeckt ist, und eine Streuschicht, die im Auflicht diffus reflektiert, wobei die Streuschicht zumindest eine der Aussparungen vollflächig ausfüllt. Eine hochpräzise strukturierte spiegelnde Schicht definiert sowohl die lateralen Abmessungen der Strukturen der spiegelnden Schicht als auch die lateralen geometrischen Abmessungen der die Aussparungen ausfüllenden Bereiche der Streuschicht, die bei einer Betrachtung der Kalibrierzelle durch das transparente Substrat hindurch erfassbar sind. Ein Verfahren zum Herstellen einer Kalibrierzelle umfasst somit die Schritte: Bereitstellen eines transparenten Substrats, Aufbringen einer hochpräzise strukturierten spiegelnden Schicht auf eine Seitenfläche des Substrats, wobei die hierbei gebildete Struktur so ausgestaltet wird, dass die spiegelnde Schicht mindestens eine Aussparung aufweist, vorzugsweise mehrere Aussparungen, an der bzw. an denen die Seitenfläche des Substrats nicht mit der spiegelnden Schicht bedeckt ist, und anschließendes Aufbringen einer Streuschicht, die im Auflicht diffus reflektiert, wobei die mindestens eine Aussparung, vorzugsweise mehrere Aussparungen, vollflächig mit der Streuschicht ausfüllt werden. Bei einer Messeinrichtung, die die geometrischen Abmessungen anhand einer ortsaufgelösten Abbildung ermittelt, werden bei einem erfindungsgemäßen Verfahren die geometrischen Konturen der strukturierten spiegelnden Schicht ermittelt, indem die Kalibrierzelle im Durchlicht von der Substratseite aus betrachtet bzw. ortsaufgelöst abgebildet wird. Die spiegelnde Schicht ist für Strahlung, beispielsweise Licht, undurchlässig, so dass sich die mit der spiegelnden Schicht bedeckten Bereiche gegenüber dem nicht bedeckten Substrat deutlich abhebt, so dass die Konturen aus einem Kontrastunterschied leicht und genau ermittelbar sind. Wird die Streuschicht aus einem transluzenten Material hergestellt, so heben sich die Bereiche der spiegelnden Schicht im Durchlicht auch gegenüber dem mit der transluzenten Streuschicht bedeckten Substrat im Bereich der Aussparungen ab. Betrachtet man hingegen die Kalibrierzelle von der Substratseite aus im Auflicht, so wird bei geeignet gewählter Einstrahlrichtung die verwendete Strahlung, beispielsweise von Licht im sichtbaren Bereich, die auf die spiegelnden Abschnitte der strukturierten spiegelnden Schicht auftreffenden Anteile der Strahlung gemäß den Gesetzen der geometrischen Optik reflektiert. Hierdurch ist es möglich zu erreichen, dass dieses Licht bei der ortsaufgelösten Abbildung der Kalibrierzelle nicht erfasst wird. Die spiegelnden Bereiche werden somit als dunkle Flächenabschnitte abgebildet. Da die auf die Streuschicht auftreffende Strahlung diffus reflektiert wird, sind die von der Streuschicht vollflächig ausgefüllten Aussparungen in der ortsaufgelösten Abbildung als helle Bereiche deutlich zu erkennen. Die geometrischen Abmessungen der streuenden Bereiche sind durch die hochpräzise Strukturierung der spiegelnden Bereiche festgelegt, so dass es ausreichend ist, die spiegelnde Schicht hochpräzise zu strukturieren. Eine Aussparung in der spiegelnden Schicht, die nicht vollständig von dieser umschlossen ist, ist vollflächig ausgefüllt, sofern eine durch zwei Punkte auf der die Aussparung definierenden Kontur der spiegelnden Schicht verlaufende gedachte Grade existiert, die gemeinsam mit der definierenden Kontur ein Gebiet der Aussparung umschließt und dieses so umschlossene Gebiet vollflächig ausgefüllt ist. Zum Nachweis der Messfähigkeit werden die ermittelten geometrischen Abmessungen mit den vorbekannten Abmessungen verglichen. Gegebenenfalls aufgrund der Betrachtung durch das Substrat (sowie durch eine oder mehrere möglicherweise vorhandene Entspiegelungsschichten) hindurch verursachte geometrische Abbildungsveränderungen können rechnerisch berücksichtigt werden.

Um eine Messfähigkeit einer Messeinrichtung nachzuweisen, dies bedeutet nachzuweisen, dass die Messeinrichtung präzise Messwerte für eine bekannte Kalibrierprobe liefert, ist es beispielsweise im Bereich der Solarzellenfertigung von besonders großem Interesse, die geometrische Außenkontur präzise zu vermessen. Um sicherzustellen, dass die Struktur der spiegelnden Schicht durch eine beispielsweise zur Herstellung verwendete Maske bestimmt und festgelegt ist und nicht von der flächigen Ausdehnung des Substrats abhängt, wird erfindungsgemäß die spiegelnde Schicht auf die Seitenfläche des Substrats so aufgebracht, dass ein umlaufender Randstreifen der Seitenfläche des Substrats von der spiegelnden Schicht unbedeckt bleibt. Bei der Kalibrierzelle weist die Seitenfläche somit einen von der spiegelnden Schicht unbedeckten umlaufenden Randbereich auf. Ebenso ist es selbstverständlich möglich, einen strukturierten Bereich zu schaffen, der von einem umlaufenden Streifen umgeben ist, welcher von der spiegelnden Schicht unbedeckt ist.

Eine besonders einfache hochpräzise und reproduzierbare Strukturierung beim Aufbringen der spiegelnden Schicht lässt sich durch eine Verwendung einer Maske erreichen. Masken lassen sich sehr präzise mit Toleranzen im Submikrometerbereich beispielsweise durch lithografische Verfahren herstellen. Durch eine solche hochpräzise hergestellte Maske werden die Teile der Substratschicht abgedeckt, auf die die spiegelnde Schicht nicht aufgebracht werden soll. Zum Aufbringen der spiegelnden Schicht können Materialien, wie beispielsweise Chrom, Molybdän, Gold, Silber, oder beliebige andere Materialen, die eine spiegelnde Oberfläche auf dem Substrat bilden und zugleich hinreichend opak für Strahlung im Durchlicht sind, verwendet werden. Das Aufbringen kann mittels eines beliebigen Verfahrens beispielsweise über Aufdampfen, Sputtern oder Ähnliches erfolgen. Ebenso ist es Möglich zunächst mit einer Maske auf jene Bereiche, die nicht mit der spiegelnden Schicht bedeckt werden sollen, eine Schutzschicht aufzubringen, anschließend auf die nicht von der Schutzschicht bedeckten Bereiche und gegebenenfalls die Schutzschicht die spiegelnde Schicht aufzubringen und anschließend die Schutzschicht, gegebenenfalls mit dem daraufaufgebrachten spiegelnden Material, zu entfernen.

Als Substratschicht eignet sich insbesondere ein transparentes Material, welches einen geringen Wärmeausdehnungskoeffizienten aufweist. Beispielsweise sind Quarzglas oder Borosilikatglas geeignete Substratmaterialien, welche ferner eine hohe mechanische Stabilität aufweisen.

Für die Ausbildung der diffus reflektierenden Schicht kommt eine Vielzahl von Materialien in Betracht. Das Aufbringen kann durch Aufdrucken, Aufdampfen oder auch in einem Tauchprozess erfolgen. es kann jedes beliebige Verfahren genutzt werden. Voraussetzung ist lediglich, dass die Schicht so aufgebracht wird, dass mindestens eine in der spiegelnden Schicht ausgebildete Aussparung vollflächig von dem Material der Streuschicht ausgefüllt wird.

Vorteilhaft ist es, wenn die Streuschicht transluzent ausgebildet ist bzw. wird, insbesondere im Durchlicht diffus streut. Hierdurch kann im Durchlicht ein Kontrast zwischen der opak ausgebildeten spiegelnden Schicht und der Streuschicht erreicht werden. Es versteht sich für den Fachmann, dass diese Eigenschaft der Streuschicht nur dort zum tragen kommt, wo die Streuschicht weder die spiegelnde Schicht überdeckt noch durch eine weitere Schicht, welche opak ausgebildet ist, selbst überdeckt ist.

Um einen besonders scharfen Kontrast im Bereich der Außenkontur bei der optischen ortsaufgelösten Abbildung im Durchlicht zu erreichen, wird es bevorzugt, wenn der umlaufende Randbereich auch nicht von der Streuschicht bedeckt wird. Dieses kann beispielsweise erreicht werden, indem nach dem Aufbringen der spiegelnden Schicht zum Aufbringen der Streuschicht eine weitere Maske verwendet wird, die diesen Randbereich vollflächig überdeckt. Ebenso ist es möglich, eine Schutzschicht aufzubringen, die diesen umlaufenden Randbereich vollflächig überdeckt, die dann nach einem Aufbringen der Streuschicht wieder entfernt wird.

Da in Fertigungsstraßen für Solarzellen die ortsaufgelöste Abbildung häufig durch induktive Sensoren ausgelöst wird, die eine Anwesenheit einer Solarzelle im Erfassungsbereich der Messeinrichtung induktiv erfassen, wird bei einer Ausführungsform
der Erfindung zusätzlich auf die Streuschicht eine Induktionsschicht aufgebracht, welche mittels induktiv messender Sensoren erfassbar ist. Insbesondere wird eine solche Induktionsschicht somit aus einem leitenden Material hergestellt, in welches Wirbelströme induzierbar sind. Dem Fachmann sind verschiedene Metalle und Legierungen bekannt, die hierfür geeignet sind. Die spiegelnde Schicht ist hinsichtlich ihrer Materialstärke in der Regel so ausgebildet, dass diese von induktiv messenden Sensoren nicht zuverlässig erkannt wird. Da die Induktionsschicht, wenn sie aus einem Metall oder einer Legierung hergestellt wird, für Strahlung im Durchlicht opak ist, wird diese geeignet angepasst an die Strukturierung der spiegelnden Schicht aufgebracht. Dies bedeutet, dass die für eine Überprüfung der Messfähigkeit vorgesehenen Konturen der spiegelnden Schicht nicht durch Material der Induktionsschicht überdeckt werden. Da es für einen Nachweis der Messfähigkeit im Hinblick auf das Solarzellenmaterial bei Messeinrichtungen in der Regel nur auf die Außenabmessungen der Solarzelle ankommt, ist es in der Regel lediglich erforderlich, dass der oben bereits erwähnte umlaufende Randbereich nicht durch die Induktionsschicht überdeckt wird. In der Regel wird ein weiterer Randbereich, welcherflächig größer als der umlaufende Randbereich ist und diesen vollständig überdeckt, freigelassen und nicht von der Induktionsschicht überdeckt. Erneut kann dies durch die
Verwendung einer Maske oder ein Aufbringen einer Schutzschicht vor dem Aufbringen der Induktionsschicht erfolgen, wobei die Schutzschicht nach dem Auftragen wieder entfernt wird. Es versteht sich für den Fachmann, dass bei einer Verwendung einer Maske oder einer Schutzschicht dieses jeweils dieselben für das Aufbringen der Streuschicht und der Induktionsschicht sein können.

Um bei der ortsaufgelösten Abbildung keine störenden Effekte aufgrund von Lichtspiegelungen an der Eintrittsfläche des Substrats zu erhalten, wird die der mit der spiegelnden Schicht versehende Seitenfläche gegenüberliegende Seitenfläche bei einer bevorzugten Ausführungsform mit einer Entspiegelung versehen. Hierfür können ein oder mehrere Antireflexschichten aufgebracht werden oder sein.

Bei einer weiteren Ausführungsform der Erfindung werden typische bei Solarzellen auftretende Fehlerstellen nachgebildet. Diese können Beispielsweise Kantenausbrüche, Risse, oder Flecken auf der Bedruckung umfassen, die über Abänderungen der Strukturierung der spiegelnden Schicht oder eine mechanische Beschädigung oder Manipulation der aufgebrachten Schichten nachgebildet werden.

Die Erfindung wird nachfolgend anhand eines bevorzugten Ausführungsbeispiels unter Bezugnahme auf eine Zeichnung näher erläutert. Hierbei zeigen:
- Fig. 1: eine schematische Schnittansicht durch eine Kalibrierzelle;
- Fig. 2: eine Draufsicht auf die Kalibrierzelle nach Fig. 1, betrachtet von der Substratseite aus;
- Fig. 3: eine schematische Darstellung einer Maske zur Herstellung der spiegelnden Schicht;
- Fig. 4: eine schematische Darstellung einer Maske, die bei einem Aufbringen der Streuschicht verwendet wird;
- Fig. 5: eine schematische Darstellung einer Maske zur Verwendung bei einer Aufbringung der Induktionsschicht; und
- Fig. 6: eine Draufsicht auf eine weitere Kalibrierzelle ähnlich zu der nach Fig. 1, betrachtet von der Substratseite, wobei die Kalibrierzelle eingebrachte Fehlerstellen umfasst.

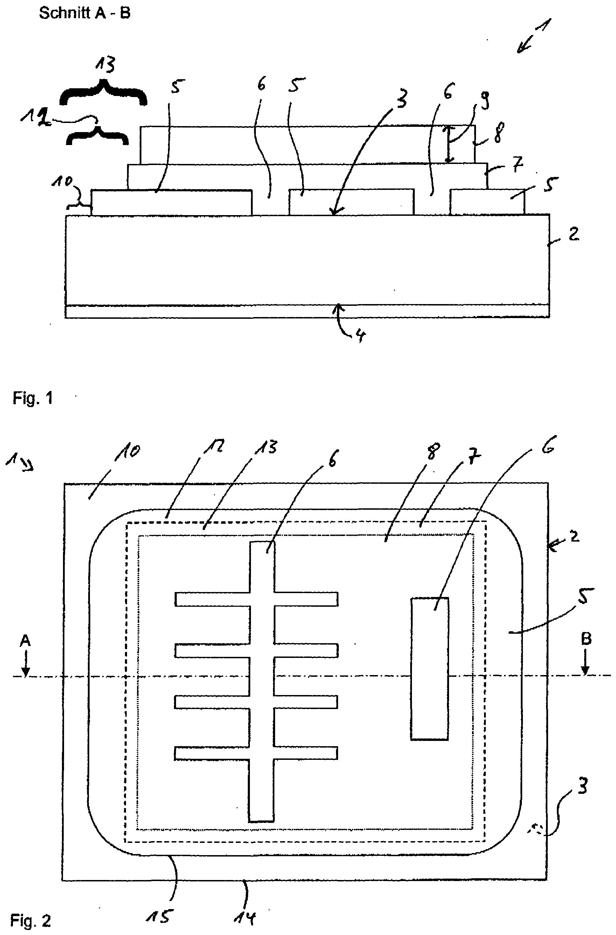

In Fig. 1 ist schematisch eine Kalibrierzelle 1 als Schnittansicht entlang einer Schnittlinie A-B nach Fig. 2 dargestellt. Die Kallbrierzelle 1 umfasst ein transparentes Substrat 2. Dieses ist flächig senkrecht zur Zeichnungsebene ausgedehnt. Als transparentes Material eignen sich Gläser oder beispielsweise Quarzglas. Das Substrat weist eine Seitenfläche auf, welche eben ausgebildet ist. Die Seitenfläche 3 ist vorzugsweise planparallel zu einer gegenüberliegen Seitenfläche 4, die ebenfalls eben ausgebildet ist.

Auf die Seitenfläche 3 ist eine hochpräzise strukturierte spiegelnde Schicht 5 aufgebracht. Die spiegelnde Schicht 5 wird beispielsweise aus Chrom oder Wolfram hergestellt. Es können beliebige andere Materialien verwendet werden, solange durch das Substrat auf die spiegelnde Schicht (5) auftreffende Strahlung an dieser gemäß den Gesetzen der geometrischen Optik gespiegelt wird. Die spiegelnde Schicht 5 weist Aussparungen 6 auf. Auf die spiegelnde Schicht 5 und auf die Seitenfläche 3 des Substrats 2 im Bereich der Aussparungen 6 wird eine Streuschicht 7 aufgebracht. Diese ist so ausgebildet, dass sie im Auflicht auftreffende Strahlung diffus reflektiert. Bevorzugt wird Streuschicht so ausgebildet, dass die Streuschicht im Durchlicht zumindest transluzent ist, vorzugsweise diffus streut.

Bei der hier dargestellten Ausführungsform ist auf die Streuschicht 7 zusätzlich eine Induktionsschicht 8 aufgebracht. Diese ist aus einem Material hergestellt, welches mit einem induktiven Messsensor wechselwirkt. Insbesondere eignen sich somit metallische Materialien, die in einer ausreichenden Schichtdicke 9 aufgebracht werden. Die Induktionsschicht wird von einer Reihe von Messeinrichtungen genutzt, um eine Messung der Messeinrichtung auszulösen, wenn induktive Sensoren eine Anwesenheit der Kalibrierzelle im Erfassungsbereich der Messeinrichtung feststellen.

In Fig. 1 ist zusätzlich eine auf der gegenüberliegenden Seitenfläche 4 aufgebrachte Antireflexionsschicht 16 einer Entspiegelung zu erkennen.

In Fig. 2 ist eine Draufsicht auf die Kalibrierzelle 1 nach Fig. 1 dargestellt, wobei die Kalibrierzelle durch das Substrat 2 bzw. die Antireflexionsschicht 16 (vgl. Fig. 1) betrachtet wird. Die gleichen technischen Merkmale sind mit denselben Bezugszeichen gekennzeichnet. Gut zu erkennen ist, dass die spiegelnde Schicht 5 so auf das Substrat 2 aufgebracht wird, dass ein Randbereich 10 umlaufend von der Seitenfläche 3 unbedeckt bleibt. Dieser Randbereich bleibt auch unbedeckt von der Streuschicht und der gegebenenfalls vorhandenen Induktionsschicht. Wie zu erkennen ist, lassen bei dieser Ausführungsform die Streuschicht 7 und die Induktionsschicht 8 jeweils entsprechende weitere, vorzugsweise breiter als der Randbereich 10 ausgebildete, Randbereiche 12 bzw. 13 umlaufend um eine Außenkontur 14 des Substrats 2 unbedeckt. Hierdurch wird sichergestellt, dass eine im Durchlicht sichtbare äußere Kontur durch die hochpräzise strukturierte spiegelnde Schicht definiert ist. Eine Überdeckung des Randbereichs 10 durch die streuende Schicht 7 wäre tolerierbar, sofern diese transluzent ausgebildet ist. Die Induktionsschicht 8 muss jedoch in jedem Fall so aufgebracht werden, dass diese eine zu vermessende Außenkontur 15 der spiegelnden Schicht 5 nicht überdeckt. Die hochpräzise Strukturierung erreicht man, indem man die Bereiche der Substratschicht mit einer Maske abdeckt, die nicht mit der spiegelnden Schicht bedeckt werden sollen.

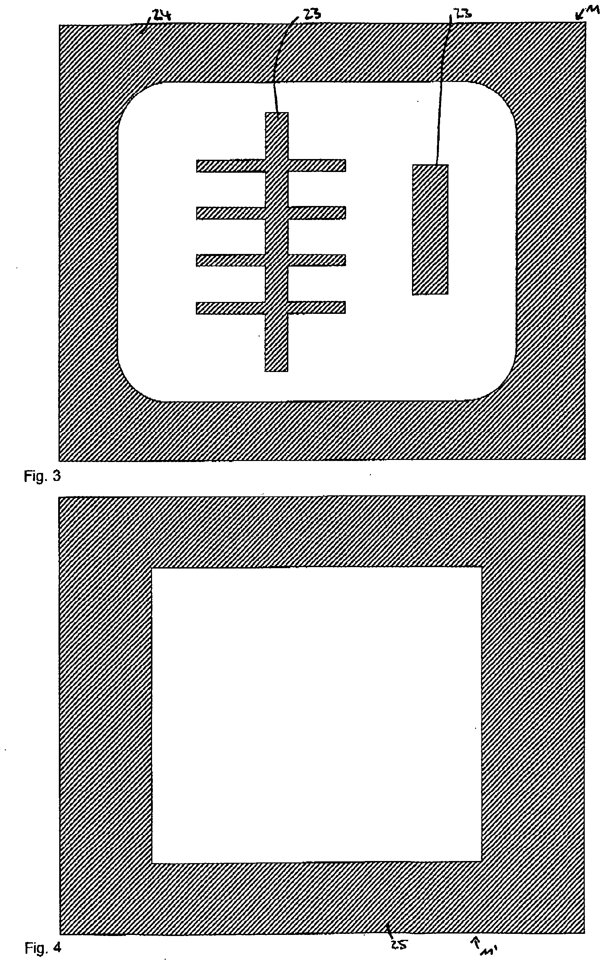

Schematisch ist eine solche Maske 11 in Fig. 3 dargestellt. Zu erkennen sind die Teile 23 der Maske, an denen die Aussparungen 6 in Fig. 1 und Fig. 2 gebildet werden, die beim anschließenden Aufbringen der Streuschicht durch diese vollflächig ausgefüllt werden. Ferner ist eine Abdeckung 24 zum Erstellen des Randbereiches 10 nach Fig. 1 und Fig. 2 zu erkennen. Mit einer solchen Maske, die nach Vorgaben hochpräzise herstellbar ist, lassen sich hinsichtlich ihrer lateralen geometrischen Abmessungen wohlbekannte Kalibierzellen reproduzierbar herstellen. Masken lassen sich mit einer Qualität herstellen, das auftretende Maßabweichungen der durch die Maske definierten Struktur von einer vorgegebenen Struktur deutlich kleiner als die erreichbaren Messtoleranzen der verwendeten Messeinrichtungen sind. Ebenso lasen sich mit Masken spiegelnde Schichten auf Substratoberflächen aufbringen, die in der Strukturierung hinsichtlich ihrer Maßhaltigkeit Abweichungen von der vorgegebenen Struktur unterhalb der Messtoleranzen der Messeinrichtungen aufweisen.

In Fig. 4 ist eine weitere Maske 11' dargestellt, die beispielsweise zum Aufbringen der Streuschicht 7 gemäß Fig. 1 und Fig. 2 verwendet wird, durch die lediglich der umlaufende Randbereich 12 gemäß Fig. 1 und Fig. 2 durch eine weitere Abdeckung 25 abgedeckt ist.

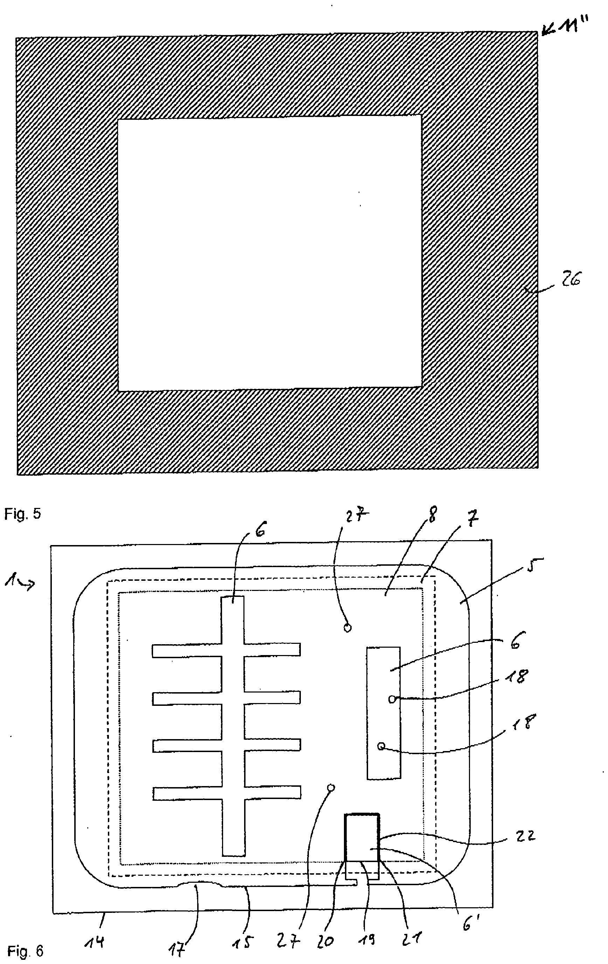

Eine ebensolche Maske 11" mit einer weiteren Abdeckung 26, durch die der Randbereich 13 gemäß Fig. 1 und Fig. 2 abgedeckt wird, ist in Fig. 5 gezeigt und kann beim Aufbringen der Induktionsschicht 8 gemäß Fig. 1 und Fig. 2 verwendet werden.

In Fig. 6 ist eine Kalibrierzelle 1 ähnlich zu der nach Fig. 1 dargestellt, die jedoch Fehlstellen aufweist. In der Außenkontur 15 der spiegelnden Schicht 5 Ist eine einen Kantenausbruch nachbildende Konturmodifikation 17 eingearbeitet. Im Bereich der Aussparungen 6 sind zusatzlich kleine Gebiete 18 der spiegelnden Schicht eingefügt, um Flecken in der Bedruckung nachzubilden. Ebenso können Löcher 27 in der spiegelnden Schicht eingebracht werden, um Druckfehler nachzubilden. Andere Fehlstellen können durch ein Einbringen von Kratzern oder gezielt eingebrachte Verunreinigungen in die einzelnen Schichten, insbesondere die Streuschicht oder die spiegelnde Schicht, nachgebildet werden.

In Fig. 6 erstreckt sich eine weitere Aussparung 6' bis an die Außenkontur 15 der spiegelnden Schicht 5. Eine gedachte Gerade 19 durch die Punkte 20, 21, die auf der die Aussparung 6' umgrenzenden Kontur 22 der spiegelnden Schicht 5 liegen, umschließt gemeinsam mit der umgrenzenden Kontur 22 ein Gebiet der Aussparung 6', welches vollflächig mit der Streuschicht ausgefüllt ist. Die Aussparung 6' ist somit im Sinne der Erfindung ebenfalls vollflächig mit der Streusicht ausgefüllt.

Es ergibt sich für den Fachmann, dass in den schematischen Darstellungen die einzelnen Dimensionen, insbesondere die Schichtdicken des Substrats 2 im Verhältnis zu den Schichtdicken der spiegelnden Schicht 5, der Streuschicht 7 und der Induktionsschicht 8, nicht maßstabsgerecht dargestellt sind. Die Substratschicht weist eine sehr viel größere Schichtdicke als die spiegelnde Schicht 5, die Streuschicht 7 und die Induktionsschicht 8 sowie die Antireflexschicht 16 auf.

Darüber hinaus ergibt sich für den Fachmann, dass die jeweilige geometrische Ausprägung der Schichten sowie die für die jeweilige Schicht gewählten Reflektionsgrade und Transmissionen abhängig vom konkret nachzubildenden Messobjekt (beispielsweise einem Erzeugnis) geeignet zu wählen sind.

### Bezugszeichenliste

- 1: Kalibrierzelle
- 2: Substrat
- 3: Seitenfläche
- 4: gegenüberliegende Seitenfläche
- 5: spiegelnde Schicht
- 6: Aussparungen
- 6': Kontur
- 7: Streuschicht
- 8: Induktionsschicht
- 9: Schichtdicke
- 10: Randbereich
- 11: Maske mit einer hochpräzisen, hinsichtlich der geometrischen Abmessungen bekannten Struktur
- 11': Maske zum Aufbringen einer Streuschicht
- 11": Maske zum Aufbringen einer Induktionsschicht
- 12, 13: weitere Randbereiche
- 14: Außenkontur des Substrats
- 15: Außenkontur der spiegelnden Schicht
- 16: Antireflexionsschicht
- 17: Konturmodifikation
- 18: kleine Gebiete der spiegelnden Schicht
- 19: Gerade
- 20, 21: Punkte
- 22: umgrenzende Kontur
- 23: Teile
- 24: Abdeckung für Randbereich 10
- 25, 26: weitere Abdeckung für weitere Randbereiche 12 bzw. 13
- 27: Löcher

## Patentansprüche

1. Verfahren zum Herstellen einer Kalibrierzelle (1) für eine abbildende Messeinrichtung zur Überprüfung sowohl geometrischer Maße einer Halbleiterstruktur, insbesondere einer Solarzelle, als auch geometrischer Maße einer hierauf aufgebrachten Bedruckung umfassend die Schritte:
Bereitstellen eines transparenten Substrats (2),
Aufbringen einer hinsichtlich ihrer lateralen geometrischen Abmessungen bekannten strukturierten spiegelnden Schicht (5) auf eine Seitenfläche (3) des Substrats (2), wobei die hierbei ausgebildete Struktur, die durch das transparente Substrat transmittierte Strahlung spiegelnd reflektiert, so ausgestaltet ist, dass die spiegelnde Schicht (5) mindestens eine Aussparung (6, 6') aufweist, an der die Seitenfläche (3) des Substrats (2) nicht mit der spiegelnden Schicht (5) bedeckt ist,
und wobei die mindestens eine Aussparung (6) vollständig von der spiegelnden Schicht umgeben ist oder auf der die mindestens eine Aussparung (6') umgrenzenden Kontur (22) der spiegelnden Schicht (5) zwei Punkte (20, 21) liegen und eine Gerade (19) durch die zwei Punkte (20, 21) gemeinsam mit der umgrenzenden Kontur (22) der spiegelnden Schicht (5) ein Gebiet der mindestens einen Aussparung (6') umschließt,
Aufbringen einer Streuschicht (7), die in Auflicht diffus reflektiert, so dass die mindestens eine Aussparung (6) vollflächig ausgefüllt wird, wobei die mindestens eine Aussparung (6, 6'), sofern sie nicht vollständig von der spiegelnden Schicht umschlossen ist, vollflächig ausgefüllt ist, wenn das durch die Grade (19) und die umgrenzende Kontur(22) umschlossene Gebiet vollflächig ausgefüllt ist, wobei bei einer Betrachtung von der Substratseite aus im Auflicht die auf die Streuschicht auftreffende Strahlung diffus reflektiert wird, wobei die spiegelnde Schicht (5) auf die Seitenfläche des Substrats (2) so aufgebracht wird, dass ein umlaufender Randbereich (10) der Seitenfläche (3) des Substrats (2) von der spiegelnden Sicht (5) unbedeckt bleibt.

2. Verfahren nach Anspruch 1, **dadurch gekennzeichnet, dass** die spiegelnde Schicht (5) auf die Seitenfläche (3) des Substrats (2) mit Hilfe einer eine Struktur aufweisenden Maske (11) aufgebracht wird, wobei die geometrischen Abmessungen der Struktur im Submikrometerbereich bekannt sind.

3. Verfahren nach Anspruch 1 oder 2, **dadurch gekennzeichnet, dass** die spiegelnde Schicht (5) auf die Seitenfläche (3) des Substrats (2) mit Hilfe einer eine Struktur aufweisenden Maske (11) aufgebracht wird, sodass die Strukturierung der spiegelnden Schicht (5) hinsichtlich ihrer Maßhaltigkeit Abweichungen von den vorbekannten geometrischen Abmessungen unterhalb der Messtoleranzen der abbildenden Messeinrichtung aufweist.

4. Verfahren nach einem der Ansprüche 1 bis 3, **dadurch gekennzeichnet, dass** eine gegenüberliegende Seitenfläche des Substrats (2), die der mit der spiegelnden Schicht (5) versehenen Seitenfläche (3) gegenüber liegt, mit einer Entspiegelung über ein Aufbringen von einer oder mehrere Antireflexschichten versehen wird.

5. Verfahren nach einem der Ansprüche 1 bis 4, **dadurch gekennzeichnet, dass** die Streuschicht (7) in der Weise aufgebracht wird, dass die Streuschicht (7) nicht in den einen umlaufenden Randbereich (10) hineinragt.

6. Verfahren nach einem der Ansprüche 1 bis 5, **dadurch gekennzeichnet, dass** auf die Streuschicht (7) und gegebenenfalls zusätzlich auf die spiegelnde Schicht (5) eine Induktionsschicht (8) aufgebracht wird, die einen weiteren Randbereich (14) entlang einer Außenkontur (15) des Substrats (2) frei lässt, wobei der weitere Randbereich (14) den einen umlaufenden Randbereich (10) vollflächig überdeckt und wobei die Induktionsschicht (8) aus einem leitenden Material hergestellt wird, in das Wirbelströme induzierbar sind.

7. Kalibrierzelle (1) für eine abbildende Messeinrichtung zur Überprüfung sowohl geometrischer Maße einer Halbleiterstruktur, insbesondere einer Solarzelle, als auch geometrischer Maße einer hierauf aufgebrachten Bedruckung umfassend ein transparentes Substrat (2), wobei auf eine Seitenfläche eine hinsichtlich ihrer geometrischen Gestalt und lateralen Abmessungen bekannte strukturierte spiegelnde Schicht (5) aufgetragen ist, die durch das transparente Substrat (2) transmittierte Strahlung spiegelnd reflektiert, wobei die Struktur so ausgebildet ist, dass die spiegelnde Schicht (5) mindestens eine Aussparung (6) aufweist, an denen die Seitenfläche (3) des Substrats (2) durch die spiegelnde Schicht (5) nicht überdeckt ist, wobei die mindestens eine Aussparung (6) vollständig von der spiegelnden Schicht umgeben ist oder auf der die mindestens eine Aussparung (6') umgrenzenden Kontur (22) der spiegelnden Schicht (5) zwei Punkte (20, 21) liegen und eine Gerade (19) durch die zwei Punkte (20, 21) gemeinsam mit der umgrenzenden Kontur (22) der spiegelnden Schicht (5) ein Gebiet der mindestens einen Aussparung (6') vollständig umschließt, und eine Streuschicht (7), die im Auflicht diffus reflektiert, sodass bei einer Betrachtung von der Substratseite aus im Auflicht die auf die Streuschicht auftreffende Strahlung diffus reflektiert wird, wobei die Streuschicht (7) die mindestens eine Aussparung (6) vollflächig ausfüllt, wobei die mindestens eine Aussparung (6, 6'), sofern sie nicht vollständig von der spiegelnden Schicht umschlossen ist, vollflächig ausgefüllt ist, wenn das durch die Grade (19) und die umgrenzende Kontur(22) umschlossene Gebiet vollflächig ausgefüllt ist, wobei die Seitenfläche (3) einen von der spiegelnden Schicht (5) unbedeckten umlaufenden Randbereich (10) entlang einer Außenkontur (14) des Substrats (2) aufweist.

8. Kalibrierzelle (1) nach Anspruch 7, **dadurch gekennzeichnet, dass** die spiegelnde Schicht (5) aus einem Metall mittels eines mindestens eine eine hinsichtlich der geometrischen Abmessungen im Submikrometerbereich bekannte Struktur definierenden Maske (11) verwendenden Verfahrens aufgebracht ist.

9. Kalibrierzelle (1) nach Anspruch 7 oder 8, **dadurch gekennzeichnet, dass** die spiegelnde Schicht und/oder die Streuschicht Nachbildungen von bei Solarzellen auftretenden Fehlstellen aufweisen, wobei Fehlstellen über Kratzer oder Verunreinigungen in der spiegelnden Schicht und/oder Verunreinigungen in der Streuschicht ausgebildet sind.

10. Kalibrierzelle (1) nach einem der Ansprüche 7 bis 9, **dadurch gekennzeichnet, dass** eine Induktionsschicht (8) für eine Wechselwirkung mit einem induktiven Sensor ausgebildet ist, die zumindest durch die spiegelnde Schichte (5) und/oder die Streuschicht (7) von der Seitenfläche des Substrats (2) beabstandet ist.

11. Kalibrierzelle (1) nach Anspruch 10, **dadurch gekennzeichnet, dass** die Induktionsschicht (8) aus einem leitenden Material auf die Streuschicht (7) und gegebenenfalls zusätzlich Teile der spiegelnden Schicht (5) aufgebracht ist.

12. Kalibrierzelle (1) nach einem der Ansprüche 9 bis 11, **dadurch gekennzeichnet, dass** das Substrat (2) und die spiegelnde Schicht (5) in bezüglich der Außenkontur (14) des Substrats (2) definierten weiteren Randbereichen (13, 14), die jeweils den einen unbedeckten Randbereich (10) vollflächig überdecken, nicht von der Induktionsschicht (8) und/oder von der Streuschicht (7) bedeckt sind.

13. Kalibrierzelle nach einem der Ansprüche 7 bis 12, **dadurch gekennzeichnet, dass** eine der einen Seitenfläche (3) gegenüberliegende Seitenfläche (4) mindestens eine Antireflexionsschicht (16) für eine Entspiegelung aufweist.

14. Kalibrierzelle nach einem der Ansprüche 7 bis 13, **dadurch gekennzeichnet, dass** die Streuschicht (7) im Durchlicht diffus streut.

15. Verfahren zum Nachweisen einer Messfähigkeit einer abbildenden Messeinrichtung zum Überprüfen sowohl geometrischer Maße einer Halbleiterstruktur, insbesondere einer Solarzelle, als auch geometrischer Maße einer hierauf aufgebrachten Bedruckung umfassend die Schritte:
Bereitstellen einer Kalibrierzelle (1) nach einem der Ansprüche 7 bis 13 oder Herstellen einer Kalibrierzelle (1) gemäß dem Verfahren nach einem der Ansprüche 1 bis 6,
Erfassen einer ortsaufgelösten Abbildung der Kalibrierzelle (1) im Durchlicht von der Substratseite aus,
und Ermitteln geometrischer Abmessungen der spiegelnden Schicht (5) anhand der einen ortsaufgelösten Abbildung,
Erfassen einer weiteren ortsaufgelösten Abbildung von der Substratseite der Kalibrierzelle (1) im Auflicht, wobei von der Substratseite aus im Auflicht die auf die Streuschicht auftreffende Strahlung diffus reflektiert wird, und Ermitteln der Abmessungen der mindestens einen vollflächig ausgefüllten Aussparung (6; 6') der spiegelnden Schicht (5) anhand der erfassten weiteren Abbildung, wobei die vollflächig ausgefüllte Aussparung (6) entweder vollständig von der spiegelnden Schicht umgeben ist und zusätzlich vollflächig mit der im Auflicht diffus streuenden Streuschicht (7) ausgefüllt ist oder andererseits die Aussparung (6'), sofern sie nicht vollständig von der spiegelnden Schicht umschlossen ist, vollständig ausgefüllt ist, wenn ein Gebiet der Aussparung (6) gemeinsam von einer Geraden (19) durch zwei Punkte (20, 21), die auf der die Aussparung (6') umgrenzenden Kontur (22) der spiegelnden Schicht (5) liegen, und der umgrenzenden Kontur (22) der spiegelnden Schicht (5) umschlossen ist und zusätzlich das durch die Grade (19) und die umgrenzende Kontur (22) umschlossene Gebiet vollflächig mit der im Auflicht diffus streuenden Streuschicht (7) ausgefüllt ist,
wobei beim Ermitteln der geometrischen Abmessungen der spiegelnden Schicht (5) eine geometrische Außenkontur der spiegelnden Schicht, die von einem umlaufenden Randbereich der Seitenfläche des Substrats umgeben ist, der nicht mit der spiegelnden Schicht bedeckt ist, vermessen wird,
und Vergleichen der ermittelten Abmessungen mit den vorbekannten Abmessungen der strukturierten spiegelnden Schicht (5).

## Claims

1. Method for producing a calibration cell (1) for an imaging measurement device for checking both geometric dimensions of a semiconductor structure, in particular of a solar cell, and geometric dimensions of an imprint applied thereto, comprising the following steps:
providing a transparent substrate (2),
applying a structured specularly reflective layer (5), which is known with regard to its lateral geometric dimensions, to a side surface (3) of the substrate (2), wherein the structure embodied by this, which specularly reflects radiation transmitted through the transparent substrate, is configured such that the specularly reflective layer (5) has at least one cutout (6, 6') at which the side surface (3) of the substrate (2) is not covered with the specularly reflective layer (5),
and wherein the at least one cutout (6) is completely surrounded by the specularly reflective layer or two points (20, 21) lie on the contour (22) of the specularly reflective layer (5) which bounds the at least one cutout (6'), and a straight line (19) through the two points (20, 21) together with the bounding contour (22) of the specularly reflective layer (5) encloses a region of the at least one cutout (6'),
applying a scattering layer (7), which diffusely reflects in reflected light, such that the at least one cutout (6) is filled over the whole area, wherein the at least one cutout (6, 6'), if it is not completely enclosed by the specularly reflective layer, is filled over the whole area if the region enclosed by the straight line (19) and the bounding contour (22) is filled over the whole area, wherein as viewed from the substrate side in reflected light the radiation impinging on the scattering layer is diffusely reflected, wherein the specularly reflective layer (5) is applied to the side surface of the substrate (2) such that a circumferential edge region (10) of the side surface (3) of the substrate (2) is left so that it is not covered by the specularly reflective layer (5).

2. Method according to Claim 1, **characterized in that** the specularly reflective layer (5) is applied to the side surface (3) of the substrate (2) with the aid of a mask (11) having a structure, wherein the geometric dimensions of the structure in the submicron range are known.

3. Method according to Claim 1 or 2, **characterized in that** the specularly reflective layer (5) is applied to the side surface (3) of the substrate (2) with the aid of a mask (11) having a structure, such that the structuring of the specularly reflective layer (5), with regard to its dimensional accuracy, have deviations from the previously known geometric dimensions below the measurement tolerances of the imaging measurement device.

4. Method according to any of Claims 1 to 3, **characterized in that** an opposite side surface of the substrate (2) situated opposite the side surface (3) provided with the specularly reflective layer (5) is provided with an antireflective arrangement by way of one or more antireflection layers being applied.

5. Method according to any of Claims 1 to 4, **characterized in that** the scattering layer (7) is applied in such a way that the scattering layer (7) does not project into the one circumferential edge region (10).

6. Method according to any of Claims 1 to 5, **characterized in that** an induction layer (8) is applied to the scattering layer (7) and optionally additionally to the specularly reflective layer (5), which induction layer leaves free a further edge region (14) along an outer contour (15) of the substrate (2), wherein the further edge region (14) covers the one circumferential edge region (10) over the whole area, and wherein the induction layer (8) is produced from a conductive material into which eddy currents are able to be induced.

7. Calibration cell (1) for an imaging measurement device for checking both geometric dimensions of a semiconductor structure, in particular of a solar cell, and geometric dimensions of an imprint applied thereto, comprising a transparent substrate (2), wherein a structured specularly reflective layer (5), which is known with regard to its geometric shape and lateral dimensions, is applied to a side surface, which layer specularly reflects radiation transmitted through the transparent substrate (2), wherein the structure is embodied such that the specularly reflective layer (5) has at least one cutout (6) at which the side surface (3) of the substrate (2) is not covered by the specularly reflective layer (5), wherein the at least one cutout (6) is completely surrounded by the specularly reflective layer or two points (20, 21) lie on the contour (22) of the specularly reflective layer (5) which bounds the at least one cutout (6'), and a straight line (19) through the two points (20, 21) together with the bounding contour (22) of the specularly reflective layer (5) completely encloses a region of the at least one cutout (6'), and
a scattering layer (7), which diffusely reflects in reflected light, such that as viewed from the substrate side in reflected light the radiation impinging on the scattering layer is diffusely reflected, wherein the scattering layer (7) fills the at least one cutout (6) over the whole area, wherein the at least one cutout (6, 6'), if it is not completely enclosed by the specularly reflective layer, is filled over the whole area if the region enclosed by the straight line (19) and the bounding contour (22) is filled over the whole area, wherein the side surface (3) has a circumferential edge region (10) along an outer contour (14) of the substrate (2), said circumferential edge region not being covered by the specularly reflective layer (5) .

8. Calibration cell (1) according to Claim 7, **characterized in that** the specularly reflective layer (5) composed of a metal is applied by means of a method that uses at least one mask (11) defining a structure that is known with regard to the geometric dimensions in the submicron range.

9. Calibration cell (1) according to Claim 7 or 8, **characterized in that** the specularly reflective layer and/or the scattering layer have/has simulations of defects that occur in the case of solar cells, wherein defects are formed by way of scratches or contaminants in the specularly reflective layer and/or contaminants in the scattering layer.

10. Calibration cell (1) according to any of Claims 7 to 9, **characterized in that** an induction layer (8) is embodied for an interaction with an inductive sensor, said induction layer being spaced apart from the side surface of the substrate (2) at least by the specularly reflective layer (5) and/or the scattering layer (7).

11. Calibration cell (1) according to Claim 10, **characterized in that** the induction layer (8) composed of a conductive material is applied to the scattering layer (7) and optionally additionally parts of the specularly reflective layer (5).

12. Calibration cell (1) according to any one of Claims 9 to 11, **characterized in that** the substrate (2) and the specularly reflective layer (5), in further edge regions (13, 14) defined with respect to the outer contour (14) of the substrate (2), said edge regions in each case covering the one uncovered edge region (10) over the whole area, are not covered by the induction layer (8) and/or by the scattering layer (7) .

13. Calibration cell according to any of Claims 7 to 12, **characterized in that** a side surface (4) situated opposite the one side surface (3) has at least one antireflection layer (16) for an antireflective arrangement.

14. Calibration cell according to any of Claims 7 to 13, **characterized in that** the scattering layer (7) scatters diffusely in transmitted light.

15. Method for verifying a measurement capability of an imaging measurement device for checking both geometric dimensions of a semiconductor structure, in particular of a solar cell, and geometric dimensions of an imprint applied thereto, comprising the following steps:
providing a calibration cell (1) according to any of Claims 7 to 13 or
producing a calibration cell (1) in accordance with the method according to any of Claims 1 to 6,
detecting one spatially resolved imaging of the calibration cell (1) in transmitted light from the substrate side,
and determining geometric dimensions of the specularly reflective layer (5) on the basis of said one spatially resolved imaging,
detecting a further spatially resolved imaging from the substrate side of the calibration cell (1) in reflected light, wherein the radiation impinging on the scattering layer is diffusely reflected from the substrate side in reflected light, and determining the dimensions of the at least one cutout (6; 6'), which is filled over the whole area, on the specularly reflective layer (5) on the basis of the further imaging detected, wherein either the cutout (6), which is filled over the whole area, is completely surrounded by the specularly reflective layer and the cutout is additionally filled over the whole area with the scattering layer (7), which scatters diffusely in reflected light, or on the other hand the cutout (6'), if it is not completely enclosed by the specularly reflective layer, is filled over the whole area, when a region is enclosed together by a straight line (19) through two points (20, 21), which lie on the contour (22) of the specularly reflective layer (5) which bounds the cutout (6'), and the bounding contour (22) of the specularly reflective layer (5) and additionally the region enclosed by the straight line (19) and the bounding contour (22) is filled over the whole area with the scattering layer (7), which scatters diffusely in reflected light, wherein determining the geometric dimensions of the specularly reflective layer (5) involves measuring a geometric outer contour of the specularly reflective layer which is surrounded by a circumferential edge region of the side surface of the substrate, said circumferential edge region not being covered with the specularly reflective layer,
and comparing the dimensions determined with the previously known dimensions of the structured specularly reflective layer (5).

## Revendications

1. Procédé de production d'une cellule de calibrage (1) pour un dispositif de mesure imageur destiné à vérifier à la fois les dimensions géométriques d'une structure semi-conductrice, en particulier d'une cellule solaire, et les dimensions géométriques d'une impression appliquée sur celle-ci, comprenant les étapes consistant à :
fournir un substrat transparent (2),
appliquer une couche réfléchissante (5) structurée connue en ce qui concerne ses dimensions géométriques latérales sur une surface latérale (3) du substrat (2), dans lequel la structure ainsi réalisée, qui réfléchit de manière spéculaire le rayonnement transmis à travers le substrat transparent, est réalisée de telle sorte que la couche réfléchissante (5) présente au moins un évidement (6, 6') au niveau duquel la surface latérale (3) du substrat (2) n'est pas recouverte par la couche réfléchissante (5), et dans lequel ledit au moins un évidement (6) est entièrement entouré par la couche réfléchissante ou bien deux points (20, 21) sont situés sur le contour (22) de la couche réfléchissante (5) délimitant ledit au moins un évidement (6') et une droite (19) passant par les deux points (20, 21) entoure, conjointement avec le contour de délimitation (22) de la couche réfléchissante (5), une zone dudit au moins un évidement (6'),
appliquer une couche diffusante (7) qui réfléchit de manière diffuse en lumière incidente, de manière à ce que ledit au moins un évidement (6) soit entièrement rempli, dans lequel ledit au moins un évidement (6, 6'), s'il n'est pas entièrement entouré par la couche réfléchissante, est entièrement rempli lorsque la zone entourée par la droite (19) et le contour de délimitation (22) est entièrement remplie, dans lequel, lorsqu'il est observé depuis le côté substrat en lumière incidente, le rayonnement incident sur la couche diffusante est réfléchi de manière diffuse, dans lequel la couche réfléchissante (5) est appliquée sur la surface latérale du substrat (2) de manière à ce qu'une zone de bord périphérique (10) de la surface latérale (3) du substrat (2) reste non recouverte par la couche réfléchissante (5) .

2. Procédé selon la revendication 1, **caractérisé en ce que** la couche réfléchissante (5) est appliquée sur la surface latérale (3) du substrat (2) à l'aide d'un masque (11) présentant une structure, dans lequel les dimensions géométriques de la structure sont connues dans le domaine submicrométrique.

3. Procédé selon la revendication 1 ou 2, **caractérisé en ce que** la couche réfléchissante (5) est appliquée sur la surface latérale (3) du substrat (2) à l'aide d'un masque (11) présentant une structure, de manière à ce que la structuration de la couche réfléchissante (5) présentent des écarts de précision dimensionnelle par rapport aux dimensions géométriques précédemment connues, qui sont inférieures aux tolérances de mesure du dispositif de mesure imageur.

4. Procédé selon l'une des revendications 1 à 3, **caractérisé en ce qu'**une surface latérale opposée de la couche de substrat (2), qui est opposée à la surface latérale (3) pourvue de la couche réfléchissante (5), est pourvue d'un revêtement antiréfléchissant par application d'une ou de plusieurs couches antiréfléchissantes.

5. Procédé selon l'une des revendications 1 à 4, **caractérisé en ce que** la couche diffusante (7) est appliquée de manière à ce que la couche diffusante (7) ne fasse pas saillie dans la zone de bord périphérique (10) .

6. Procédé selon l'une des revendications 1 à 5, **caractérisé en ce qu'**une couche d'induction (8) est appliquée sur la couche diffusante (7) et, le cas échéant, également sur la couche réfléchissante (5), et laisse libre une autre zone de bord (14) le long d'un contour extérieur (15) du substrat (2), dans lequel l'autre zone de bord (14) recouvre entièrement ladite zone de bord périphérique (10) et dans lequel la couche d'induction (8) est produite à partir d'un matériau conducteur dans lequel des courants de Foucault peuvent être induits.

7. Cellule de calibrage (1) pour un dispositif de mesure imageur destiné à vérifier à la fois les dimensions géométriques d'une structure semi-conductrice, en particulier d'une cellule solaire, et les dimensions géométriques d'une impression appliquée sur celle-ci, comprenant un substrat transparent (2), dans lequel une couche réfléchissante (5) structurée connue en ce qui concerne sa configuration géométrique et ses dimensions latérales est appliquée sur une surface latérale, et réfléchit de manière spéculaire le rayonnement transmis à travers le substrat transparent (2), dans lequel la structure est réalisée de telle sorte que la couche réfléchissante (5) présente au moins un évidement (6) au niveau duquel la surface latérale (3) du substrat (2) n'est pas recouverte par la couche réfléchissante (5), dans lequel ledit au moins un évidement (6) est entièrement entouré par la couche réfléchissante ou bien deux points (20, 21) sont situés sur le contour (22) de la couche réfléchissante (5) délimitant ledit au moins un évidement (6') et une droite (19) passant par les deux points (20, 21) entoure entièrement, conjointement avec le contour de délimitation (22) de la couche réfléchissante (5), une zone dudit au moins un évidement (6'), et une couche diffusante (7) qui réfléchit de manière diffuse en lumière incidente, de manière à ce que, lorsqu'il est observé depuis le côté substrat en lumière incidente, le rayonnement incident sur la couche diffusante soit réfléchi de manière diffuse, dans lequel la couche diffusante (7) remplit entièrement ledit au moins un évidement (6), dans lequel ledit au moins un évidement (6, 6'), s'il n'est pas entièrement entouré par la couche réfléchissante, est entièrement rempli lorsque la zone entourée par la droite (19) et le contour de délimitation (22) est entièrement remplie, dans lequel la surface latérale (3) présente une zone de bord périphérique (10), le long d'un contour extérieur (14) du substrat (2), qui n'est pas recouverte par la couche réfléchissante (5).

8. Cellule de calibrage (1) selon la revendication 7, **caractérisée en ce que** la couche réfléchissante (5) est appliquée à partir d'un métal au moyen d'un procédé utilisant au moins un masque (11) définissant une structure connue en ce qui concerne les dimensions géométriques dans la gamme submicronique.

9. Cellule de calibrage (1) selon la revendication 7 ou 8, **caractérisée en ce que** la couche réfléchissante et/ou la couche diffusante présentent des reproductions de défauts apparaissant dans des cellules solaires, dans laquelle des défauts sont formés par des rayures ou des impuretés dans la couche réfléchissante et/ou des impuretés dans la couche diffusante.

10. Cellule de calibrage (1) selon l'une des revendications 7 à 9, **caractérisée en ce qu'**une couche d'induction (8) destinée à interagir avec un capteur inductif est réalisée, laquelle couche d'induction est espacée de la surface latérale du substrat (2) au moins par la couche réfléchissante (5) et/ou la couche diffusante (7).

11. Cellule de calibrage (1) selon la revendication 10, **caractérisée en ce que** la couche d'induction (8) constituée d'un matériau conducteur est appliquée sur la couche diffusante (7) et, le cas échéant, sur des parties supplémentaires de la couche réfléchissante (5).

12. Cellule de calibrage (1) selon l'une des revendications 9 à 11, **caractérisée en ce que** le substrat (2) et la couche réfléchissante (5) ne sont pas recouverts par la couche d'induction (8) et/ou par la couche diffusante (7) dans d'autres zones de bord (13, 14) qui sont définies par rapport au contour extérieur (14) du substrat (2) et qui recouvrent respectivement entièrement la zone de bord (10) non recouverte.

13. Cellule de calibrage selon l'une des revendications 7 à 12, **caractérisée en ce qu'**une surface latérale (4) opposée à l'une des surfaces latérales (3) présente au moins une couche antiréfléchissante (16) destinée à un revêtement antiréfléchissant.

14. Cellule de calibrage selon l'une des revendications 7 à 13, **caractérisée en ce que** la couche diffusante (7) disperse de manière diffuse en lumière transmise.

15. Procédé de contrôle d'une capacité de mesure d'un dispositif de mesure imageur destiné à vérifier à la fois les dimensions géométriques d'une structure semi-conductrice, en particulier d'une cellule solaire, et les dimensions géométriques d'une impression appliquée sur celle-ci, comprenant les étapes consistant à :
fournir une cellule de calibrage (1) selon l'une des revendications 7 à 13 ou produire une cellule de calibrage (1) conformément au procédé selon l'une des revendications 1 à 6,
détecter une image spatialement résolue de la cellule de calibrage (1) en lumière transmise depuis le côté substrat, et
déterminer des dimensions géométriques de la couche réfléchissante (5) sur la base de ladite image spatialement résolue,
détecter une autre image spatialement résolue du côté substrat de la cellule de calibrage (1) en lumière incidente, dans lequel le rayonnement incident sur la couche diffusante est réfléchi de manière diffuse par le côté substrat en lumière incidente, et déterminer les dimensions dudit au moins un évidement (6, 6') entièrement rempli de la couche réfléchissante (5) sur la base de l'autre image détectée,
dans lequel l'évidement (6) entièrement rempli est soit entièrement entouré par la couche réfléchissante et qui est en outre entièrement rempli par la couche diffusante (7) produisant une diffusion en lumière incidente, dans lequel ledit au moins un évidement (6'), s'il n'est pas entièrement entouré par la couche réfléchissante, est entièrement rempli lorsque la zone de l'évidement est entourée par une droite (19) passant par deux points (20, 21), situés sur le contour (22) de la couche réfléchissante (5) délimitant l'évidement (6'), et le contour de délimitation (22) de la couche réfléchissante (5) et qu'en outre la zone qui est entourée par la droite (19) et le contour de délimitation (22) est entièrement rempli par la couche diffusante (7) dans lequel, lors de la détermination des dimensions géométriques de la couche réfléchissante (5), qui est entourée par une zone de bord périphérique de la surface latérale du substrat qui n'est pas recouverte par la couche réfléchissante et comparer les dimensions précédemment connues de la couche réfléchissante.
